# EUROPÄISCHE PATENTANMELDUNG

(11) **EP 1 887 746 A1**
(43) Veröffentlichungstag der Anmeldung: **13.02.2008**
(21) Anmeldenummer: 06016658.4
(22) Anmeldetag: 09.08.2006
(51) Int. Cl.: H04L 12/58

(54) **Sicherungssystem und -verfahren für elektronische Post**

(71) Anmelder: MintNet GmbH, 24937 Flensburg (DE)
(72) Erfinder: von Wildenradt, Dirk, 24991 Freienwill (DE)
(74) Vertreter: Glawe, Delfs, Moll

(57) **Zusammenfassung**

Die Erfindung betrifft ein System zum Sichern von elektronischer Post von einer ersten Teilnehmereinheit (1) zu einer zweiten Teilnehmereinheit (2) über ein öffentliches Weitverkehrsdatennetz (9). Erfindungsgemäß ist vorgesehen ein Sicherungsserver (3), der eine Kundendatenbank (31), eine Tokendatenbank (32), einen Tokengenerator (36) zum Erzeugen einzigartiger Token, und einen Validator (38) für den Token aufweist, wobei die erste Teilnehmereinheit (1) einen Sicherungsagent (13) aufweist mit einem Interface zu einem Mailclient (11), einen Triggersignal-Generator (14) und einen Token-Integrator (15) zum Einfügen des Tokens in eine elektronische Postnachricht, und wobei die zweite Teilnehmereinheit (2) einen Sicherungsagent (23) zweiter Art aufweist mit einem Interface (22) zu einem Mailclient (21), einem Tokenextraktor (26) und einem Inhibitor (27). Die Erfindung erreicht damit, dass ausgehende Nachrichten mittels des Tokens zertifiziert sind, und der Empfänger bei eingehenden Nachrichten anhand des Tokens auf ihre Echtheit prüfen kann. Dies ermöglicht eine nutzerfreundliche Echtheitsprüfung. Außerdem kann zur Kontingentierung wie auch zur Finanzierung eine Nutzungsgebühr erhoben werden, so dass der Token als eine "elektronische Briefmarke" fungiert.

## Beschreibung

Die Erfindung betrifft ein Sicherungssystem und -verfahren für elektronische Post.

Mit dem Aufkommen weltumspannender Datennetze und breiter Verfügbarkeit von Anschlüssen für Privat- und Geschäftsanwender erfuhren Systeme zur Übermittelung von Nachrichten eine enorme Verbreitung. Derartige Systeme sind als elektronische Post oder Email bekannt. Einen wesentlichen Beitrag zu der Popularität haben standardisierte Übertragungsprotokolle geleistet. Dies ermöglicht den Anwendern einen einfachen, schnellen und kostengünstigen weltweiten Verkehr mit elektronischer Post. Aber gerade wegen seiner Einfachheit und Popularität weist das herkömmliche System für elektronische Post auch einige gravierende Nachteile auf. Dazu gehören insbesondere eine manipulationsanfällige Übertragung auf unbekannten Wegen über das Netz, eine fehlende Authentifizierung der Absender von Emails und dadurch begünstigt ein massenhaftes Auftreten von unverlangt zugesandten Emails. Mittels verschiedener Ansätze wird versucht, diese Nachteile zu verringern.

Verbreitet sind besondere Programme zum Erkennen und Eliminieren von unverlangt zugesandten unerwünschten Emails (Spam) und maliziöse Programme (Viren). Üblicherweise sind sie an Einzelplatzsystemen oder an Zugängen zu internen Netzen (Intranet) angeordnet und sind dazu ausgebildet, empfangene Nachrichten zu überprüfen und ggf. zu löschen. Obgleich derartige Programme einen wichtigen Beitrag zur Aufrechterhaltung der Nutzbarkeit des Internets und insbesondere des Email-Systems leisten, besteht Raum zur Verbesserung. Die Überprüfung und Erkennung von schädlichen bzw. unerwünschten Mails belastet die Empfängersysteme teilweise erheblich. Bei der automatischen Erkennung besteht eine beträchtliche Fehlergefahr, so dass als schädlich angesehene Nachrichten häufig nicht vollautomatisch endgültig gelöscht werden, sondern von dem Empfänger - mitunter in einem besonderen Ordner - durchgesehen werden müssen. Die erwünschte Entlastung von derartigen Spam-Mails wird so nicht erreicht.

Der Erfindung liegt die Aufgabe zugrunde, ein System und ein Verfahren zur Sicherung elektronischer Post bereitzustellen, das die obengenannten Nachteile vermeidet oder zumindest verringert.

Die erfindungsgemäße Lösung liegt in den Merkmalen der unabhängigen Ansprüche. Vorteilhafte Weiterbildungen sind Gegenstand der abhängigen Ansprüche.

Bei einem System zum Sichern von elektronischer Post von einer ersten Teilnehmereinheit zu einer zweiten Teilnehmereinheit über ein öffentliches Weitverkehrsdatennetz ist gemäß der Erfindung vorgesehen, dass ein Sicherungsserver, der über eine Eingabe-/Ausgabeeinheit mit dem Weitverkehrsdatennetz verbunden ist, eine Kundendatenbank, eine Tokendatenbank, die in eine Mehrzahl von Token unterteilt ist, einen Tokengenerator zum Erzeugen einzigartiger Token, und einen Validator für den Token aufweist, die erste Teilnehmereinheit einen Sicherungsagent erster Art aufweist mit einem Interface zu einem Mailclient, einem Triggersignal-Generator und einem Token-Integrator zum Einfügen des Tokens in eine elektronische Postnachricht, und die zweite Teilnehmereinheit einen Sicherungsagent zweiter Art aufweist mit einem Interface zu einem Mailclient, einen Tokenextraktor und einem Inhibitor.

Zuerst seien einige verwendete Begriffe erläutert:

Unter einer Kundendatenbank wird eine Einrichtung verstanden, die in Speicherbereiche für Identifikationssätze von berechtigten Benutzern des Sicherungsservers unterteilt ist. Die Identifikationssätze umfassen Merkmale insbesondere zu Namen und Anschrift, Rechnungsdaten sowie zusätzlichen Verwendungsmerkmalen, wie Altersfreigaben etc.

Unter einer Tokendatenbank wird eine Einrichtung verstanden, die in eine Mehrzahl von Token unterteilt ist, wobei ein Token zumindest einen Speicherbereich für Nutzungszustand und eingeprägten Benutzer aufweist.

Unter einem Tokengenerator wird eine Einrichtung verstanden, die dazu ausgebildet ist, jeweils einzigartige Token zu erzeugen, in Abhängigkeit von einem angelegten Identifikationssatz zu individualisieren ("prägen") und in der Tokendatenbank abzuspeichern.

Unter einem Validator wird eine Einrichtung verstanden, die dazu ausgebildet ist, einen extrahierten Token auf seine Gültigkeit anhand der Tokendatenbank zu prüfen.

Unter einem Triggersignal-Generator wird eine Einrichtung verstanden, die dazu ausgebildet ist, auf Anforderung beim Senden einer elektronischen Nachricht ein Anforderungssignal für einen Token an den Sicherungsserver zu übermitteln.

Ein Token-Integrator ist dazu ausgebildet, einen von dem Sicherungsserver übermittelten Token an die elektronische Nachricht anzufügen.

Unter einem Token-Extraktor wird eine Einrichtung verstanden, die dazu ausgebildet ist, aus einer empfangenen elektronischen Nachricht den Token abzutrennen und an den Sicherungsserver zu übermitteln.

Ein Inhibitor ist dazu ausgebildet, die empfangene elektronische Nachricht erst bei Empfang eines Freigabesignals an das Interface zum Mailclient zu übermitteln.

Kern der Erfindung ist der Gedanke, das Versenden von unerwünschten Mails mittels eines Zertifizierungssystems zu unterbinden. Es wird ein Sicherungsserver bereitgestellt, zu dem die Teilnehmereinheiten, in der Regel sind dies die PC der Internetnutzer, Kontakt mittels eines speziellen Sicherungsagenten Kontakt aufnehmen. Der Sicherungsserver erzeugt einen Token. Der Token fungiert als eine Art elektronische Briefmarke, die auf die jeweilige sendende Teilnehmereinheit individualisiert ("geprägt") wird. Zur Verwaltung der Token verfügt der Sicherungsserver über den Token-generator, an die Kundendatenbank und die Tokendatenbank angeschlossen sind. Der erzeugte und individualisierte Token wird an die anfragende sendende Teilnehmereinheit übermittelt. Dessen Sicherungsagent fügt den Token an die zu sendende Email, die damit zur Übertragung bereit ist. Die Übertragung an sich kann auf konventionelle Weise erfolgen, das heißt mit üblichen Mailclients und standardisierten Protokollen über ein öffentliches Netz, wie dem Internet. Die empfangende Teilnehmereinheit erhält die Mail mit dem Token. Sie extrahiert den Token und übermittelt eine Anfrage zur Validität des Tokens an den Sicherungsserver. Der Token wird geprüft, und bei positivem Ergebnis wird ein entsprechendes Signal an die empfangende Teilnehmereinheit übermittelt. Die bis dahin zurückgehaltene Mail wird nur bei positivem Ergebnis an den Mailclient zur konventionellen Weiterbehandlung übergeben.

Die Erfindung erreicht durch den Sicherungsserver und durch die mit den Mailclients zusammenwirkenden Sicherungsagenten, dass ausgehende Nachrichten mittels eines Tokens als "elektronische Briefmarke" zertifiziert sind, und der Empfänger bei eingehenden Nachrichten anhand dieser "elektronischen Briefmarke" die Nachricht auf ihre Echtheit hin mittels des Sicherungsservers prüfen kann. Dies ermöglicht eine für den Nutzer transparente und damit einfache Echtheits- und Herkunftsprüfung. Die Prägung der "elektronischen Briefmarke" auf den Sender bewirkt, dass ein unerkanntes Senden von Spam-Mails nicht mehr möglich ist. Zudem kann eine Kontingentierung vorgesehen sein. Außerdem kann eine Nutzungsgebühr erhoben werden, so dass der Token auch in dieser Hinsicht eine "elektronische Briefmarke" darstellt. Damit wird zum einen eine einfache und nutzungsgerechte Finanzierung des erfindungsgemäßen Systems erreicht, sondern zugleich auch eine erhebliche Schwelle gegenüber den Versendern von Massenmails errichtet.

Es kann vorgesehen sein, statt einem mehrere Sicherungsserver in einem Cluster bereitzustellen. Damit kann eine größere Nutzeranzahl versorgt werden. Zudem können bei einer räumlichen Verteilung der Cluster die Signalwege und damit die Antwortzeiten für die einzelnen Teilnehmer verringert werden. Mit einer solchen regionalen Aufspaltung kann eine beträchtliche Performance-Steigerung erreicht werden. Dabei ist es nicht unbedingt erforderlich, dass jeder Server ein Spiegel des anderen ist. Obgleich das Vorhandensein von einigen Spiegel-Servern ein Vorteil unter Redundanzgesichtspunkten ist, brauchen nur wenige solche Server als Hauptserver vorgesehen zu werden. Zweckmäßig ist es, zu einem oder mehreren solchen (Haupt-)Servern räumlich verteilte Zusatzserver vorzusehen, welche die Hauptlast der Kommunikation mit den Teilnehmer-Einheiten abwickeln. Das erfindungsgemäße System lässt sich so leicht passend zu der Anzahl der Nutzer skalieren.

Zweckmäßigerweise sind die Sicherungsagenten als Module zu den Mailclients ausgebildet. Die durch die Erfindung bereitgestellte Funktionalität weist eine hohe Benutzerfreundlichkeit auf. Die Akzeptanz des erfindungsgemäßen Systems erhöht sich dadurch.

Mit Vorteil weist die Tokendatenbank einen Index für die Token auf. Dabei ist vorzugsweise ein autoinkrementeller Index vorgesehen. Damit wird erreicht, dass jede Nummer des Index nur einmal verwendet wird. Die Datenbank erhält so eine klare Struktur zu den Token und ihrem Verwendungsstatus. Die Indexierung ist weiter ein Vorteil bei einer Clusterung der Server. Die Leistungsfähigkeit des erfindungsgemäßen Systems steigert sich dadurch beträchtlich.

Zweckmäßigerweise ist ein Chiffrier-/Dechiffriereinheit für die Token vorgesehen. Damit kann der Sicherungsserver die Token verschlüsseln, bevor sie seine Sphäre verlassen bzw. erst wieder innerhalb seiner Sphäre entschlüsseln. Mit der Chiffrierung wird erreicht, dass der Token zwar im Huckepack auf der Email übermittelt wird und damit für Zwischenstationen sichtbar ist, sein Inhalt aber von den Zwischenstationen nicht ausgelesen werden kann. Damit weist das System eine sehr hohe Manipulationssicherheit auf, zumal dank der auf den Sicherungsserver zentralisierten Chiffrierung-/Dechiffrierung proprietäre und damit nur schwer zu entschlüsselnde Verfahren verwendet werden können.

Es ist zweckmäßig, den Validator mit einem Zusatzmodul zum Prüfen erweiterter Merkmale, wie insbesondere Kontostand oder Alter des jeweiligen Benutzers, zu versehen. Damit kann erreicht werden, dass nur bei dem Zutreffen weiterer Merkmale ein Token validiert wird. Weitergehende Nutzungsmerkmale können auf diese Weise leicht implementiert werden. So kann beispielsweise mittels eines Altersschutzmerkmals erreicht werden, dass bestimmte Mails nur von Nutzern einer ausreichenden Altersgruppe versendet oder geöffnet werden können. Gerade letzteres ermöglicht Werbetreibenden, Rundmails zu versenden und dennoch Gewähr dafür zu haben, dass nur ausreichend alte Benutzer die Rundmails öffnen können. Entsprechendes gilt für den Kontostand, um übermäßige Nutzungen bzw. Kontoüberziehungen erkennen und vermeiden zu können.

Besonders vorteilhaft ist es, ein mit dem Sicherungsserver verbundenes Abrechnungsmodul vorzusehen, dass eine Kontodatenbank aufweist. Dies ermöglicht es, für die Token eine Gebühr von den Nutzern zu erheben. In der Regel wird es eine Gebühr für das Ausgeben ("Prägen") der Token für den sendenden Teilnehmer sein, analog zu einer Briefmarke bei der herkömlichen Post. Es kann aber auch vorgesehen sein, das Öffnen bestimmter Mails mit einer Gebühr zu belegen, zum Beispiel für bestimmte Premium-Mails. Die Kontodatenbank ist dazu ausgebildet, die Kontodaten und insbesondere den Kontostand der einzelnen Nutzer des erfindungsgemäßen Systems zu verwalten. Das Abrechnungsmodul kann insbesondere dazu ausgebildet sein, bei auf Guthabenbasis geführten Konten ein Ausgeben von Token nur dann freizugeben, wenn ein positives Guthaben in der Kontodatenbank verzeichnet ist. Das Abrechnungsmodul kann mit Vorteil in den Sicherungsserver integriert sein, es kann aber auch gesondert ausgeführt sein. Weiter kann vorgesehen sein, dass das Abrechnungsmodul eine Vergütungsdatenbank, die in Speicherbereiche für die Benutzer des Systems und ihnen zugeordnete Treuewerte unterteilt ist, und einen Inkrementierer aufweist, der derart mit dem Sicherungsserver verbunden ist, dass bei erfolgreicher Übertragung der Nachricht der Treuewert des jeweiligen Benutzer erhöht wird

Die Erfindung betrifft ferner ein entsprechendes Verfahren. Bei der Übermittelung von elektronischen Nachrichten mit den Schritten Annehmen einer zu übertragenden Nachricht bei einer ersten Teilnehmer-Einheit, Übermitteln an eine zweite Teilnehmer-Einheit und Ausliefern der übertragenen Nachricht bei der zweiten Teilnehmer-Einheit sind gemäß der Erfindung als weitere Schritte vorgesehen ein Senden einer Anfrage für einen Token an einen Sicherungsserver, ein Erzeugen des Tokens durch den Sicherungsserver, ein Übermitteln des Tokens an die erste Teilnehmer-Einheit, ein Anfügen des Tokens an die zu übertragende Nachricht, ein Extrahieren des Tokens aus der übertragenen Nachricht durch die zweite Teilnehmer-Einheit unter Senden einer Validierungsanfrage an den Sicherungsserver und Freigeben der Nachricht bei positivem Ergebnis.

Zur Beschreibung des Verfahrens wird zur Vermeidung von Wiederholungen auf vorstehende Erläuterungen zu dem erfindungsgemäßen System verwiesen.

Die Erfindung wird nachfolgend unter Bezugnahme auf die Zeichnung erläutert, in der ein vorteilhaftes Ausführungsbeispiel dargestellt ist. Es zeigen:
- Fig. 1: eine Übersichtsdarstellung eines Ausführungsbeispiels des Systems;
- Fig. 2: eine Schemaansicht des in Fig. 1 dargestellten Systems;
- Fig. 3: eine schematische Darstellung eines Tokens;
- Fig. 4: eine Ablaufdarstellung für Senden;
- Fig. 5: eine Ablaufdarstellung für Empfangen; und

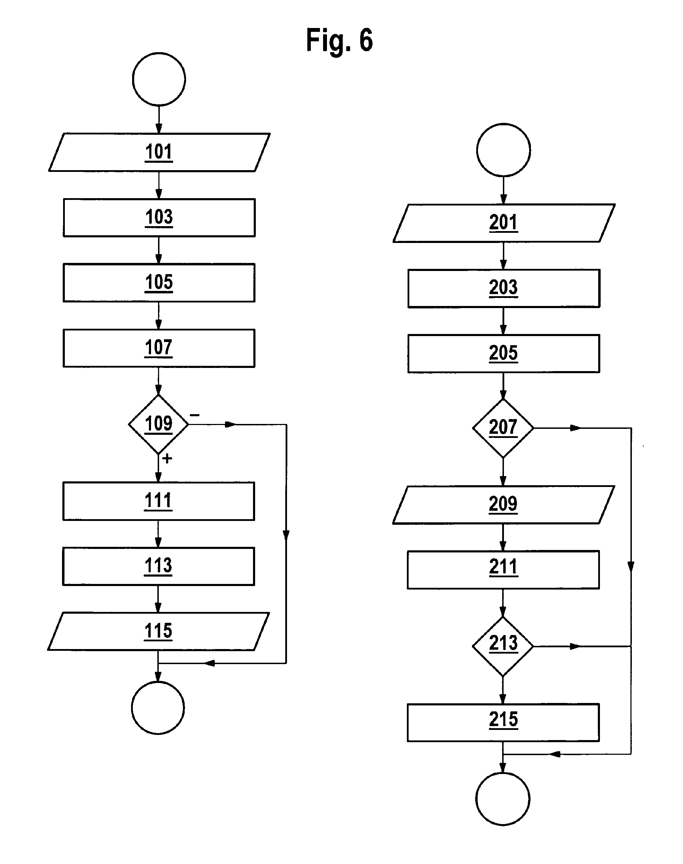

- Fig. 6: ein Flussdiagramm, das den Betrieb des Systems gemäß dem Ausführungsbeispiel zeigt.

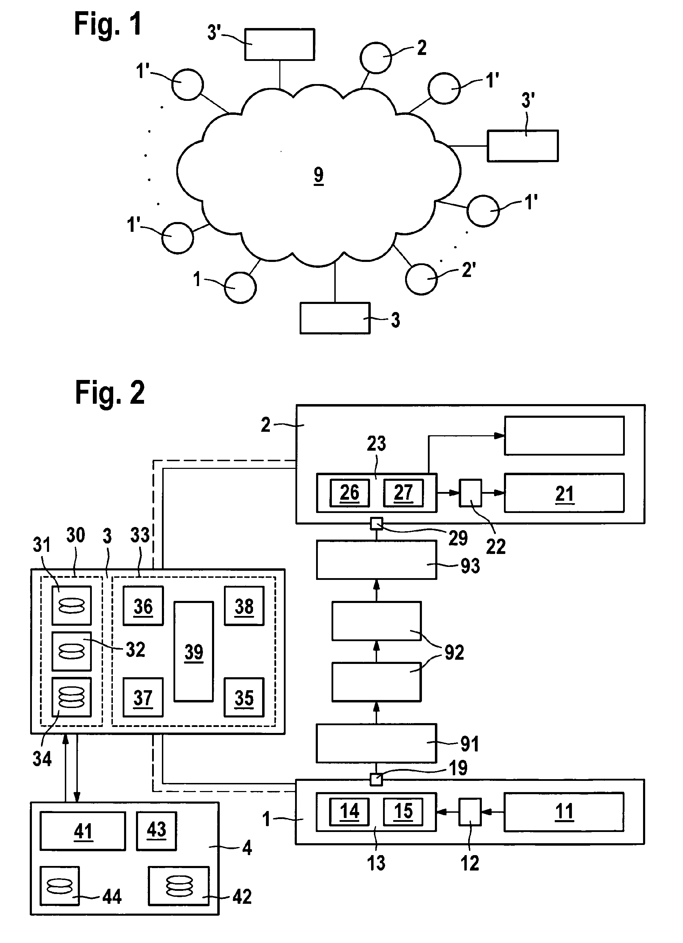

Zuerst wird auf Fig. 1 Bezug genommen. Sie zeigt eine abstrahierte Darstellung eines Ausführungsbeispiels für ein erfindungsgemäßes System. Es umfasst Teilnehmer-Einheiten 1, 2 und einen Sicherungsserver 3. Sie sind verbunden über ein herkömmliches, an sich beliebig ausgeführtes Weitverkehrsdatennetz, beispielsweise in Gestalt des öffentlichen Internets 9. An das System können beliebig viele weitere Teilnehmer-Einheiten 1', 2' angeschlossen sind. Bei einer großen Anzahl von Teilnehmer-Einheiten 1, 1', 2, 2' können zur Entlastung des Sicherungsservers 3 optional räumlich verteilte Zusatzserver 3' angeschlossen sein.

Aufbau und Funktionsweise des dargestellten Ausführungsbeispiels für das erfindungsgemäße System werden nachfolgend unter Bezugnahme auf Fig. 2 erläutert.

Die Teilnehmer-Einheiten 1, 2 sind Benutzer-Terminals. Sie können als handelsübliche, mit einem Internetinterface 19, 29 versehene Personalcomputer ausgeführt sein. Sie sind versehen mit einem üblichen Mailclient 11, 21 zum Versenden und Empfangen von Emails über das Internet 9. Weiter weisen sie jeweils einen Sicherungsagenten 13, 23 auf, der jeweils über ein Interface 12, 22 mit dem Mailclient 11, 21 verbunden ist. Hierbei ist der Sicherungsagent 13 der Teilnehmer-Einheit ein Sicherungsagent erster Art, das heißt er dient zum Versenden von Emails. In dem Ausführungsbeispiel fungiert der Sicherungsagent erster Art 13 als SMTP-Server (Simple Mail Transfer Protocol) für den Mailclient 11. Entsprechend ist die Teilnehmer-Einheit 2 mit einem Sicherungsagenten zweiter Art versehen, der zum Empfangen von Emails dient. Dieser fungiert in dem Beispiel als ein POP3-Server (Post Office Protocol) für den Mailclient 22. Die Ausgestaltung als SMTP- bzw. POP3-Server hat den Vorteil, dass die Mailclients keine speziellen Anpassungen erfordern. Zweckmäßigerweise sind die Sicherungsagenten erster und zweiter Art integriert ausgeführt, so dass die Teilnehmer-Einheiten 1, 2 sowohl Emails senden wie auch empfangen können.

Der Sicherungsserver 3 umfasst eine Datenbankeinheit 30 und eine Prozessoreinheit 33. Die Datenbankeinheit 30 enthält eine Kundendatenbank 31, eine Tokendatenbank 32 und optional eine Guthabendatenbank 34. Die Kundendatenbank 31 ist in Datensätze unterteilt, die jeweils Identifikationsdaten der berechtigten Benutzer, eine auf den jeweiligen Benutzer individualisierte ID-Nummer sowie weitere zusätzliche Merkmale, wie Alter, enthalten. In der Tokendatenbank 32 ist eine Vielzahl von jeweils einzigartigen Token gespeichert, die zur Signatur von Emails vorgesehen sind. Die Tokendatenbank 32 enthält die Token. Die Guthabendatenbank 34 enthält Datensätze, die einen Kontostand für die jeweiligen Benutzer beinhalten. Die Prozessoreinheit 33 dient zur Steuerung des Verfahrensablaufs und zur Kommunikation mit der Datenbankeinheit 30 und den Teilnehmer-Einheiten 1, 2. Die Prozessoreinheit 33 weist mehrere Funktionsmodule auf, und zwar ein Prüfmodul 35, ein Tokengenerator 36, einen autoinkrementellen Indexierer 37 und einen Validator 38. Die Prozessoreinheit 33 ist dazu ausgebildet, bei Versenden einer Email (Schritt 101) mittels des Mailclients 11 auf ein Anfragesignal (Schritt 103) des Sicherungsagenten erster Art 13 anhand der Kundendatenbank 31 zu prüfen, ob ein E-mail versendender Benutzer der Teilnehmer-Einheit 31 berechtigt ist (Schritt 105). Der Sicherungsagent erster Art 13 erzeugt das Anfragesignal mittels eines Triggersignal-Generators 14. Bei positivem Ergebnis erzeugt der Tokengenerator 36 einen Token unter Verwendung der nächsten, unbenutzten Indexnummer aus dem autoinkrementellen Indexierer 37 und individualisiert ("prägt") (Schritt 107) diesen unter Einbeziehung der entsprechenden Kundendaten aus der Kundendatenbank 31 auf den jeweiligen Benutzer der ersten Teilnehmer-Einheit 1, der die Email versendet. Durch die Individualisierung wird der Token zu einer Art "virtuellen Briefmarke" für die jeweilige Mail. Dies geschieht unter der Voraussetzung, dass die Guthabendatenbank 34 für den versendenden Benutzer ein ausreichend großes Guthaben ausweist; ansonsten wird der Token verworfen (Schritt 109). Der geprägte Token wird in die Tokendatenbank 32 unter besagter Indexnummer eingespeichert und an den Sicherungsagenten erster Art 13 übermittelt (Schritt 111). Die Indexnummer ist zweckmäßigerweise eindeutig, das heißt eine einmal vergebene Indexnummer wird nie wieder verwendet. Alternativ oder zusätzlich kann auch vorgesehen sein, die Indexnummer um eine Angabe zu dem Zeitpunkt zu erweitern; damit genügt ein endlicher Vorrat an Indexnummern. Dies ermöglicht es, den Umfang der Tokendatenbank zu verringern.

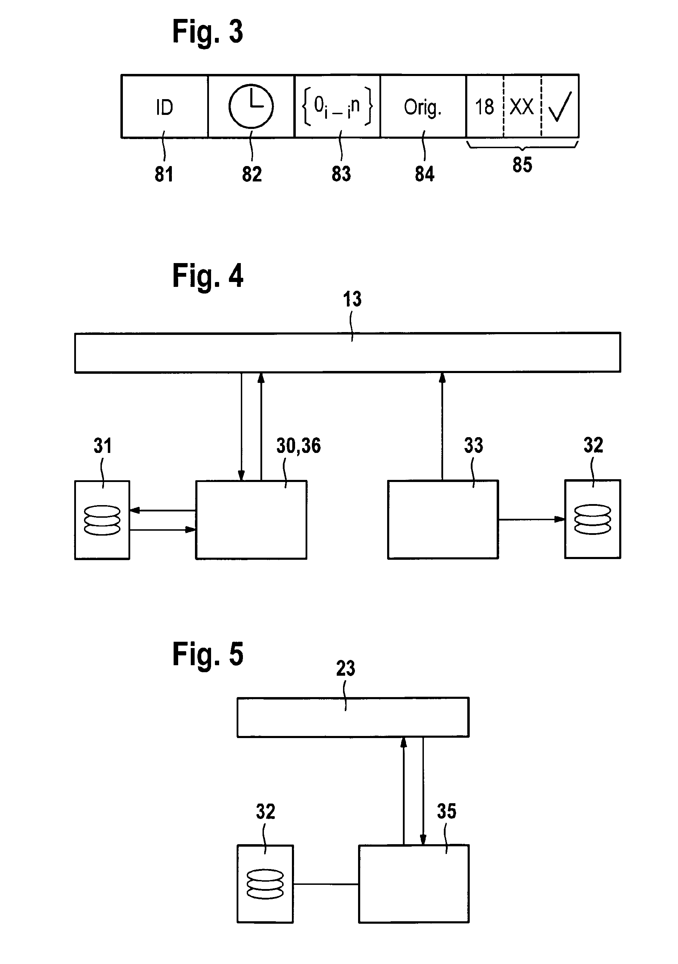

Bezugnehmend auf Fig. 3 wird der Aufbau des Tokens anhand eines Beispiels erläutert. Es handelt sich um einen Datensatz, der mehrere Datenblöcke umfasst. Ein erster Datenblock 81 ist ein Absenderdatenblock. Er enthält eine Identifikationsnummer, die den Absender eindeutig kennzeichnet. Ein zweiter Datenblock 82 enthält einen Zeitstempel, der den Zeitpunkt des Absendens der mit dem Token versehenen Email angibt. Ein dritter Datenblock 83 enthält eine Angabe zur Wertigkeit. Dies kann ein Boole'sches Datum sein, wenn es sich um einen einfachen Token handelt. Es können aber auch Mehrfach-Token vorgesehen sein, beispielsweise für EMails an mehrere Empfänger; dann handelt es sich bei der Wertigkeit um ein numerisches Datum n. Ein vierter Datenblock ist ein Originator-Datenblock 84, der den ausgebenden Sicherungserver 3 kennzeichnet. Dies ist insbesondere dann von Vorteil, wenn mehrere Server 3, 3' zur Ausgabe von Token verwendet werden. Optional können in einem fünften Datenblock 85 Zusatzinformationen enthalten sein, wie zum Beispiel Angaben zur Alterskontrolle (der Absender ist volljährig, und/oder der Empfänger muss volljährig sein) oder zum Kundenstatus (Absender hat noch Guthaben) oder andere Angaben.

Vor der Übermittlung wird der Token mittels eines an sich beliebigen Verschlüsselungsverfahrens chiffriert. Der chiffrierte Token wird mittels eines Token-Integrators 15 des Sicherungsagenten erster Art 13 der zu sendenden Email als Signatur hinzugefügt (Schritt 113). Damit wird erreicht, dass der Token zwar im Huckepack auf der Email übermittelt wird und damit für Zwischenstationen sichtbar ist, sein Inhalt aber von den Zwischenstationen nicht ausgelesen werden kann. Eine Ausnahme kann der nachfolgend erläuterte Originator-Datenblock sein. Er ist zweckmäßigerweise nicht verschlüsselt, um dem Sicherungsagenten zweiter Art 23 die Erkennung des Sicherungservers 3 zu ermöglichen, von dem der Token ausgegeben wurde und mit dem die Validierung durchzuführen ist. Die Sicherungsagenten 13, 23 behandeln dabei nur den verschlüsselten Token, sie sind weder in Verschlüsselung noch Entschlüsselung einbezogen; dies findet allein auf dem (geschützten) Sicherungsserver 3 statt. Dank dieser Architektur des Systems ist es ermöglicht, ein Verschlüsselungsverfahren anzuwenden, über das nichts außerhalb der Sphäre des Sicherungsservers 3 bekannt ist. Es können schwer zu dechiffrierende, nicht-standardisierte Verschlüsselungsverfahren verwendet, wobei die Schlüssellänge beliebig hoch sein kann und auch ein Wechsel des Schlüssels oder des ganzen Verschlüsselungsverfahren jederzeit möglich ist.

Die Email wird dann in an sich bekannter Weise über das Internet 9 versendet (Schritt 115). Dazu dient in dem Ausführungsbeispiel ein herkömmlicher Server 91 für das SMTP-Protokoll, der die von dem Interface 19 ausgehende Mail über an sich beliebige Mailknoten 92 zu einem dem Empfänger zugeordneten herkömmlichen POP3-Server 93 schickt. Von dort ruft die Teilnehmer-Einheit 2 über ihr Interface 29 die E-mail ab.

Nach dem Empfangen der Email (Schritt 201) verarbeitet der Sicherungsagent zweiter Art 23 die Email bevor sie an den Mailclient 21 weitergeleitet wird. Mittels eines Tokenextraktors 26 wird der Token (die "virtuelle Briefmarke") extrahiert (Schritt 203) und noch in chiffrierter Form an den Sicherungsserver 3 übermittelt. Dieser dechiffriert den Token und prüft ihn mittels des Validators 38 auf seine Gültigkeit (Schritt 205). Der Token wird nachfolgend in der Tokendatenbank 32 als entwertet gekennzeichnet (Schritt 211), so dass er nicht erneut verwendet werden kann. Dies geschieht, indem das Wertigkeitsdatum des Tokens um Eins heruntergesetzt wird. Ein einfacher Token ist damit entwertet; bei einem Mehrfach-Token verringert sich dadurch die Wertigkeit um Eins, bis schließlich nach Empfang bei der vorgesehenen Anzahl von Adressaten der Wert Null erreicht wird und der Token dann entwertet ist. Der Validator 38 überprüft außerdem, soweit erforderlich und vorhanden, Zusatzmerkmale, wie beispielsweise Volljährigkeit des Absenders anhand der Kundendatenbank 31. Erzeugt der Validator 38 ein positives Ergebnis, wird ein entsprechendes Signal an den Sicherungsagenten zweiter Art 23 übermittelt. Die Email, welche bis dahin von einem Inhibitor 27 festgehalten wurde, wird bei positivem Ergebnis von dem Inhibitor 27 freigegeben (Schritt 207) und mittels des Interface 22 an den Mailclient 21 ausgegeben (Schritt 209). Ist das Ergebnis des Validators 38 negativ, so wird die Email von dem Inhibitor 27 nicht freigegeben.

Zur Abrechnung kann alternativ zu der Guthabendatenbank 34 ein gesondertes Abrechnungsmodul 4 vorgesehen sein. Es umfasst eine Kontodatenbank 44, die Datensätze mit Identifikationsdaten der Benutzer und ihren jeweiligen Kontostand aufweist. Weiter ist eine Abrechnungseinheit 41 vorgesehen, die mit dem Sicherungsserver 3 verbunden und dazu ausgebildet ist, vor dem Prägen den Kontostand des jeweiligen Benutzers zu überprüfen und bei positivem Ergebnis ein Freigabesignal zum Prägen des Tokens an den Sicherungsserver 3 zu übermitteln und dabei einen vorgebbaren Betrag von dem Kontostand des jeweiligen Benutzers abzuziehen. Weiter kann eine Rückvergütung als Anreiz für Vielnutzer und Stammkunden implementiert sein. Dazu ist eine Vergütungsdatenbank 42, in der Datensätze der entsprechenden Benutzer und ihr jeweiliger Treuewert gespeichert sind, und ein Inkrementierer 43 vorgesehen, der bei festgestellter (Schritt 213) erfolgreicher Übertragung den Treuewert des jeweiligen Benutzers um einen voreinstellbaren Betrag erhöht (Schritt 215).

## Patentansprüche

1. System zum Sichern von elektronischer Post von einer ersten Teilnehmereinheit (1) zu einer zweiten Teilnehmereinheit (2) über ein öffentliches Weitverkehrsdatennetz (9),
**dadurch gekennzeichnet, dass**
ein Sicherungsserver (3), der über eine Eingabe-/Ausgabeeinheit (39) mit dem Weitverkehrsdatennetz (9) verbunden ist, eine Kundendatenbank (31), eine Tokendatenbank (32), die in eine Mehrzahl von Token unterteilt ist, einen Tokengenerator (36) zum Erzeugen einzigartiger Token, und einen Validator (38) für den Token aufweist,
die erste Teilnehmereinheit (1) einen Sicherungsagent (13) erster Art aufweist mit einem Interface (12) zu einem Mailclient (11), einem Triggersignal-Generator (14) und einem Token-Integrator (15) zum Einfügen des Tokens in eine elektronische Postnachricht, und
die zweite Teilnehmereinheit (2) einen Sicherungsagent (23) zweiter Art aufweist mit einem Interface (22) zu einem Mailclient (21), einem Tokenextraktor (26) und einem Inhibitor (27).

2. System nach Anspruch 1,
**dadurch gekennzeichnet, dass**
der Sicherungsserver (3) als ein Cluster ausgeführt ist.

3. System nach Anspruch 1 oder 2,
**dadurch gekennzeichnet, dass**
die Sicherungsagenten (13, 23) als Module zu den Mailclients ausgebildet sind.

4. System nach einem der vorangehenden Ansprüche,
**dadurch gekennzeichnet, dass**
der Sicherungsserver (3) eine Chiffrier-/Dechiffriereinheit aufweist, die vorzugsweise in die Eingabe-/Ausgabeeinheit (39) integriert ist.

5. System nach einem der vorangehenden Ansprüche,
**dadurch gekennzeichnet, dass**
der Validator (38) ein Zusatzmodul zum Prüfen erweiterter Merkmale, wie insbesondere Kontostand oder Alter des jeweiligen Nutzers, aufweist.

6. System nach einem der vorangehenden Ansprüche,
**dadurch gekennzeichnet, dass**
ein Abrechnungsmodul (4) vorgesehen ist, das mit dem Sicherungsserver (3) verbunden ist und eine Kontodatenbank (41) aufweist.

7. System nach Anspruch 6,
**dadurch gekennzeichnet, dass**
das Abrechnungsmodul (4) in den Sicherungsserver (3) integriert ist.

8. System nach Anspruch 6 oder 7,
**dadurch gekennzeichnet, dass**
der Token-Generator (36) mit dem Abrechnungsmodul (4) derart verbunden ist, um nur bei einem positiven Kontostand einen Token auf den jeweiligen Benutzer der ersten Teilnehmer-Einheit (1) zu prägen.

9. System nach einem der Ansprüche 6 bis 8,
**dadurch gekennzeichnet, dass**
das Abrechnungsmodul (4) eine Vergütungsdatenbank (42), die in Speicherbereiche für die Benutzer des Systems und ihnen zugeordnete Treuewerte unterteilt ist, und einen Inkrementierer (43) aufweist, der derart mit dem Sicherungsserver (3) verbunden ist, dass bei erfolgreicher Übertragung der Nachricht der Treuewert des jeweiligen Benutzer erhöht wird.

10. Verfahren zum Sichern von elektronischen Nachrichten mit den Schritten,
Annehmen einer zu übertragenden Nachricht bei einer ersten Teilnehmer-Einheit,
Übermitteln an eine zweite Teilnehmer-Einheit, Ausliefern der übertragenen Nachricht bei der zweiten Teilnehmer-Einheit,
**gekennzeichnet durch**
Senden einer Anfrage für einen Token an einen Sicherungsserver (3),
Erzeugen des Tokens **durch** den Sicherungsserver, Übermitteln des Tokens an die erste Teilnehmer-Einheit (1),
Anfügen des Tokens an die zu übertragende Nachricht, Extrahieren des Tokens aus der übertragenen Nachricht **durch** die zweite Teilnehmer-Einheit (2) unter Senden einer Validierungsanfrage an den Sicherungsserver (3) und Freigeben der Nachricht bei positivem Ergebnis.
